# EUROPÄISCHE PATENTSCHRIFT

(11) **EP 3 829 940 B1**
(45) Veröffentlichungstag und Bekanntmachung des Hinweises auf die Patenterteilung: **07.08.2024**
(21) Anmeldenummer: 19732594.7
(22) Anmeldetag: 18.06.2019
(51) Int. Cl.: B60S 1/38, B60S 1/40, B60S 1/04

(54) **WISCHARMADAPTEREINHEIT UND ADAPTEREINHEIT**
WIPER ARM ADAPTER UNIT AND ADAPTER UNIT
ENSEMBLE ADAPTATEUR DE BRAS D'ESSUIE-GLACE ET ENSEMBLE ADAPTATEUR

(30) Priorität: 30.07.2018 DE 102018212658
(43) Veröffentlichungstag der Anmeldung: 09.06.2021
(73) Patentinhaber: Robert Bosch GmbH, 70442 Stuttgart (DE)
(72) Erfinder: KRAEMER, Godelieve, 76549 Huegelsheim (DE); BUBBA, Marcello, 3210 Linden (BE); BRATEC, Herve, 3012 WILSELE (BE); KRUSE, Michael, 76547 Sinzheim (DE); DEPONDT, Helmut, 3370 Boutersem (BE); TRUYENS, Stijn, 3300 Tienen (BE)
(86) Internationale Anmeldenummer: PCT/EP2019/066063
(87) Internationale Veröffentlichungsnummer: WO 2020/025219

(56) Entgegenhaltungen:
- WO-A1-00/38962
- DE-A1- 102005 024 719
- DE-A1- 102015 224 634
- DE-A1- 102016 204 243
- DE-A1- 102016 211 162

## Beschreibung

Die Erfindung betrifft eine Wischarmadaptereinheit, die zu einer Kopplung, insbesondere lösbaren Kopplung mit einem Wischarm vorgesehen ist, aufweisend eine Windabweiserfläche. Die Erfindung betrifft auch eine Adaptereinheit umfassend eine Wischarmadaptereinheit.

### Stand der Technik

Es sind bereits Wischvorrichtungen umfassend einen Wischarm und ein Wischblatt sowie eine Wischarmadaptereinheit zur lösbaren Kopplung eines Wischarms mit einem Wischblatt vorgeschlagen worden. Solche Wischvorrichtungen haben den Nachteil, dass der Wischarm stets eine hohe Anpresskraft zum Andrücken des Wischblatts an eine Fahrzeugscheibe aufbringen muss, um eine ausreichende Wischleistung zu gewährleisten. Aus der DE 10 2016 211162 A1 ist darüber hinaus eine Wischvorrichtung mit den Merkmalen des Oberbegriffs des Anspruchs 1 bekannt.

### Offenbarung der Erfindung

### Vorteile

Die vorliegende Erfindung beschreibt eine Wischarmadaptereinheit, die zu einer Kopplung, insbesondere lösbaren Kopplung mit einem Wischarm vorgesehen ist, aufweisend eine Windabweiserfläche, welche dazu eingerichtet ist, eine anströmende Luft abzuweisen und ein Wischblatt an eine Fahrzeugscheibe zu drücken, und aufweisend eine Wischblattadaptereinheitaufnahme, welche dazu vorgesehen ist, eine Wischblattadaptereinheit um eine Lagerachse schwenkbar aufzunehmen, wobei die Wischblattadaptereinheit dazu vorgesehen ist, das Wischblatt aufzunehmen, dadurch gekennzeichnet, dass die Windabweiserfläche einen Hauptwinkel zwischen 25° und 65°, bevorzugt zwischen 40° und 50° mit der Lagerachse einschließt.

Das hat den Vorteil, dass die Windabweiserfläche bei schneller Fahrt aufgrund des sie anströmenden Fahrtwinds das Wischblatt an die Fahrzeugscheibe presst. Das erhöht eine Gesamtanpresskraft des Wischblatts an die Fahrzeugscheibe und verbessert die Wischleistung. Die benötigte Anpresskraft, mit welcher der Wischarm das Wischblatt an die Fahrzeugscheibe presst, wird auf diese Weise reduziert. Es kann ein günstigerer und/oder einfacherer und/oder zuverlässigerer und/oder kompakterer Wischarm mit einer geringeren Anpresskraft verwendet werden, insbesondere mit einer kleineren Feder zum Aufbringen der Anpresskraft. Weiterhin wird durch die Verwendung einer Windabweiserfläche gemäß der vorliegenden Erfindung verhindert, dass die Wischarmadaptereinheit bzw. eine Wischvorrichtung - umfassend die Wischarmadaptereinheit, das Wischblatt und den Wischarm - durch eine ungünstige Aerodynamik bei schneller Fahrt eine Kraft generiert, welche der benötigten Anpresskraft entgegengesetzt ist und so die Wischleistung verschlechtern würde oder sogar ein Wischen unmöglich machen würde. Durch die Wischarmadaptereinheit gemäß der vorliegenden Erfindung wird sichergestellt, dass aufgrund von aerodynamischen Effekten, insbesondere einem Wind, insbesondere Fahrtwind, eine resultierende Kraft das Wischblatt auf die Fahrzeugscheibe drückt.

Vorteilhaft ist die Wischarmadaptereinheit mit der Windabweiserfläche und/oder mit der Wischblattadaptereinheitaufnahme einstückig ausgebildet. Unter einstückig soll in diesem Zusammenhang insbesondere stoffschlüssig verbunden, wie beispielsweise durch einen Schweißprozess und/oder einen Klebeprozess usw. und besonders vorteilhaft angeformt verstanden werden, wie durch die Herstellung aus einem Guss und/oder durch die Herstellung in einem Ein- oder Mehrkomponentenspritzverfahren. Vorteilhaft ist die Wischarmadaptereinheit fest mit den Wischarm verbindbar, insbesondere so, dass der Wischarm im mit der Wischarmadaptereinheit verbundenen Zustand weitgehend nicht gegenüber der Wischarmadaptereinheit beweglich ist.

Unter einer Wischblattadaptereinheit soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit der Wischblattadaptereinheit verbundenen Zustand weitgehend nicht gegenüber der Wischblattadaptereinheit beweglich ist. Vorteilhaft weist die Wischblattadaptereinheit ein Verbindungselement auf, welches dazu vorgesehen ist, mit der Wischblattadaptereinheitaufnahme der Wischarmadaptereinheit schwenkbar zu koppeln. Vorteilhaft ist die Wischblattadaptereinheit mit dem Kontaktbereich und/oder mit dem Verbindungselement einstückig ausgebildet. Es ist auch denkbar, dass die Wischblattadaptereinheit mit dem Wischblatt oder mit einem Wischblattbauteil einstückig ausgebildet ist.

Vorteilhaft ist die Wischblattadaptereinheitaufnahme so ausgebildet, dass die Lagerachse senkrecht oder weitgehend senkrecht zu einer Wischarmrichtung angeordnet ist. Unter einer Wischarmrichtung soll eine Richtung verstanden werden, welche in Richtung einer größten Längsausdehnung des an der Wischarmadaptereinheit montierten Wischarms angeordnet ist. Im unmontierten Zustand ist die Wischarmrichtung die Richtung an der Wischarmadaptereinheit, in die ein montierter Wischarm zeigen würde, insbesondere in einer Grundstellung. Unter weitgehend senkrecht soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 90° abweicht. Vorteilhaft ist die Lagerachse parallel oder weitgehend parallel zu einer vorgesehenen Wischrichtung angeordnet. Unter weitgehend parallel soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 0° abweicht. Vorteilhaft ist die Lagerachse so angeordnet, dass sie in einem nicht wischenden Ruhezustand der an der Fahrzeugscheibe angebrachten Wischvorrichtung - umfassend die Wischarmadaptereinheit, das Wischblatt und den Wischarm - parallel oder weitgehend parallel zu einer Windanströmrichtung bzw. zur einer Fahrzeugfahrrichtung angeordnet ist. Im Folgenden soll unter einer Windanströmrichtung die Richtung verstanden werden, in der der Fahrtwind in einem nicht wischenden Ruhezustand der an der Fahrzeugscheibe angebrachten Wischvorrichtung anströmen würde. Besonders vorteilhaft liegt die Lagerachse in einem am Fahrzeug montierten Zustand parallel zur Fahrzeugscheibe, bevorzugt an jeder Position über eine Wischbewegung.

Unter einen Hauptwinkel ist der Winkel zu verstehen, den die Windabweiserfläche zur Lagerachse aufweist. Vorteilhaft wird der Hauptwinkel um die Wischarmrichtung gemessen. Ein positiver Hauptwinkel zwischen 0° und 90° beschreibt dabei eine Windabweiserfläche, welche wenigstens teilweise zur Windanströmrichtung zugewendet ist. Je näher der Hauptwinkel an 90°, umso stärker ist die Windabweiserfläche der Windanströmrichtung zugewendet. Vorteilhaft wird der Hauptwinkel zwischen der Lagerachse und einer Projektion der Lagerachse auf die Windabweiserfläche aufgespannt, wobei die Projektion vorteilhaft entlang einer Projektionsebene durchgeführt wird, in welcher die Lagerachse liegt und welche senkrecht oder weitgehend senkrecht zur Wischarmrichtung angeordnet ist. Es ist auch möglich, dass die Projektionsebene durch die Lagerachse und einen Normalenvektor bzw. einen mittleren Normalenvektor der Windabweiserfläche aufgespannt wird. Bei einer gekrümmten bzw. nicht ebenen Windabweiserfläche ist es denkbar, dass der Hauptwinkel zwischen der Lagerachse und einer Tangentialebene aufgespannt ist, wobei die Tangentialebene in einem ausgezeichneten Punkt - beispielsweise dem Mittelpunkt - der Windabweiserfläche liegt oder die Tangentialebene eines mittleren Normalenvektors der Windabweiserfläche ist. Unter einem mittleren Normalenvektor ist ein Vektor zu verstehen, der das Mittel über alle oder fast alle Normalenvektoren der Windabweiserfläche darstellt.

Durch die in den Unteransprüchen aufgeführten Merkmale sind vorteilhafte Weiterbildungen der Wischarmadaptereinheit möglich.

Dadurch, dass die Windabweiserfläche in Richtung der Lagerachse zumindest bereichsweise konkav ausgebildet ist, werden die aerodynamischen Eigenschaften weiter verbessert. Der durch Fahrtwind erzeugte Anpressdruck kann weiter erhöht werden. Unter konkav soll insbesondere verstanden werden, dass die Windabweiserfläche in die Wischblattadaptereinheit hineingewölbt ist.

Die Wischarmadaptereinheit wird weiter verbessert, wenn die Windabweiserfläche in Richtung der Lagerachse zumindest bereichsweise konvex ausgebildet ist. Durch einen konvexen Verlauf der Windabweiserfläche kann eine Windströmung entlang der Windabweiserfläche weitgehend laminar bzw. turbulenzfrei gehalten werden. Das ermöglicht einen stabilen und weitgehend konstanten Anpressdruck. Insbesondere werden auf diese Weise Vibrationen verhindert, welche eine störende Geräuschentwicklung entwickeln können und/oder welche die Wischarmadaptereinheit und/oder die Wischvorrichtung beschädigen bzw. in ihrer Wischleistung beinträchtigen können. Unter konvex soll insbesondere verstanden werden, dass die Windabweiserfläche aus der Wischblattadaptereinheit herausgewölbt ist.

Besonders vorteilhaft ist eine Windabweiserfläche, welche bereichsweise konvex und bereichsweise konkav ausgebildet ist. Auf diese Weise kann der Anpressdruck und/oder ein Umströmverhalten des Fahrtwindes präzise an die technischen Anforderungen angepasst werden. Beispielsweise kann die Windabweiserfläche an einem windzugewandten Rand der Windabweiserfläche konvex ausgebildet ist und an einem windabgewandten Rand der Windabweiserfläche konkav ausgebildet ist.

In vorteilhaften Varianten ist die Windabweiserfläche in Richtung der Lagerachse wenigstens bereichsweise eben ausgebildet. Das ermöglicht eine präzise Anpassung des Anpressdrucks und/oder des Umströmverhaltens des Fahrtwindes.

Unter einem windzugewandten Rand soll insbesondere ein Rand der Windabweiserfläche, bevorzugt ein Teilstück eines Umfangs der Windabweiserfläche, verstanden werden, der in einem nicht wischenden Ruhezustand der an der Fahrzeugscheibe angebrachten Wischvorrichtung - umfassend die Wischarmadaptereinheit, das Wischblatt und den Wischarm - am nächsten an der Windanströmrichtung angeordnet ist, so dass der Fahrtwind zuerst an der windzugewandten Seite der Windabweiserfläche vorbeiströmt bzw. auf diese trifft. Bevorzugt ist die Windabweiserfläche so ausgebildet, dass der windzugewandte Rand in einem nicht wischenden Ruhezustand der an der Fahrzeugscheibe angebrachten Wischvorrichtung zumindest bereichsweise senkrecht oder weitgehend senkrecht zur Windanströmrichtung angeordnet.

Unter einem windabgewandten Rand soll insbesondere ein Rand der Windabweiserfläche, bevorzugt ein Teilstück eines Umfangs der Windabweiserfläche, verstanden werden, der in einem nicht wischenden Ruhezustand der an der Fahrzeugscheibe angebrachten Wischvorrichtung - umfassend die Wischarmadaptereinheit, das Wischblatt und den Wischarm - am entferntesten von der Windanströmrichtung angeordnet ist, so dass der Fahrtwind zuletzt an der windabgewandte Seite der Windabweiserfläche vorbeiströmt bzw. auf diese trifft. Bevorzugt ist die Windabweiserfläche so ausgebildet, dass der windabgewandte Rand in einem nicht wischenden Ruhezustand der an der Fahrzeugscheibe angebrachten Wischvorrichtung zumindest bereichsweise senkrecht oder weitgehend senkrecht zur Windanströmrichtung angeordnet.

Die Wischarmadaptereinheit wird weiter verbessert, wenn die Wischarmadaptereinheit eine hintere Achse aufweist, welche an einer windabgewandten Seite der Wischarmadaptereinheit und an einer Unterseite bzw. einer der Windabweiserfläche abgewandten Seite der Wischarmadaptereinheit angeordnet ist und weitgehend parallel zu einer Wischarmrichtung angeordnet ist und die Windabweiserfläche einen senkrechten Mindestabstand zur hinteren Achse zwischen 0.8 cm und 2.0 cm, bevorzugt zwischen 1.0 cm und 1.5 cm, aufweist und die Windabweiserfläche einen senkrechten Maximalabstand zur hinteren Achse zwischen 1.5 cm und 3.0 cm, bevorzugt zwischen 2.0 cm und 2.5 cm aufweist. Auf diese Weise ist die Windabweiserfläche außerhalb eines gedachten Zylindersmantels mit einer Zylinderachse um die hintere Achse und einem Zylinderradius zwischen 0.8 cm und 2.0 cm, bevorzugt zwischen 1.0 cm und 1.5 cm angeordnet. Auf diese Weise ist die Windabweiserfläche innerhalb eines gedachten Zylindersmantels mit einer Zylinderachse um die hintere Achse und einem Zylinderradius zwischen 1.5 cm und 3.0 cm, bevorzugt zwischen 2.0 cm und 2.5 cm angeordnet. Eine auf diese Weise geformte Windabweiserfläche bietet besonders gute aerodynamische Eigenschaften und gleichzeitig genug Baumraum für die Wischarmadaptereinheit bzw. eine Adaptereinheit.

Weist die Wischarmadaptereinheit eine Wischarmaufnahme auf, welche mit der Windabweiserfläche einen Wischarmwinkel zwischen -15° und 15°, bevorzugt zwischen -5° und 5°, einschließt, hat das den Vorteil, dass der Wischarm aerodynamisch besonders günstig aufnehmbar ist. Das verbessert die aerodynamischen Eigenschaften eines Systems aus der Wischarmadaptereinheit und dem Wischarm sowie insgesamt die aerodynamischen Eigenschaften der Wischvorrichtung. Unter einer Wischarmaufnahme ist eine Öffnung für die Aufnahme des Wischarms und/oder einer Wischstange des Wischarms zu verstehen. Unter dem Wischarmwinkel ist ein Winkel zu verstehen, der zwischen einer Öffnungsrichtung, welche in Richtung der größten Ausdehnung der Wischarmaufnahme zeigt und der Windabweiserfläche aufgespannt wird. Ein montierter Wischarm ist mit dem Wischarmwinkel zur Windabweiserfläche angeordnet. Ein negativer Wischarmwinkel bedeutet, dass die Öffnungsrichtung relativ zur Windabweiserfläche im montierten Zustand der Wischarmadaptereinheit mit einer windabgewandten Öffnungsseite in Richtung der Fahrzeugscheibe geneigt ist. Ein positiver Wischarmwinkel bedeutet, dass die Öffnungsrichtung relativ zur Windabweiserfläche im montierten Zustand der Wischarmadaptereinheit mit der windabgewandten Öffnungsseite von der Fahrzeugscheibe weg zeigt.

Die Aerodynamik der Wischarmadaptereinheit wird weiter verbessert, wenn eine vordere Tangente in einem vorderen Punkt der Windabweiserfläche mit der Lagerachse einen vorderen Winkel zwischen 30° und 70°, bevorzugt zwischen 45° und 55° einschließt, wobei sich der vordere Punkt an einem windzugewandten Rand der Windabweiserfläche befindet und die vordere Tangente in einer Ebene senkrecht zur Wischarmrichtung angeordnet ist. Der vordere Winkel wird zwischen dem in Windanströmrichtung vom vorderen Punkt aus zeigenden Teil der vorderen Tangente und der Lagerachse aufgespannt.

Die Aerodynamik der Wischarmadaptereinheit wird weiter verbessert, wenn eine hintere Tangente in einem hinteren Punkt an der Windabweiserfläche mit der Lagerachse einen hinteren Winkel zwischen 10° und 60°, bevorzugt zwischen 25° und 35° einschließt, wobei sich der hintere Punkt an einem windabgewandten Rand der Windabweiserfläche befindet und die hintere Tangente in einer Ebene senkrecht zur Wischarmrichtung angeordnet ist. Der hintere Winkel wird zwischen dem in Windanströmrichtung vom hinteren Punkt aus zeigenden Teil der hinteren Tangente und der Lagerachse aufgespannt. Die Aerodynamik der Wischarmadaptereinheit wird weiter verbessert, wenn eine mittlere Tangente in einem mittleren Punkt an der Windabweiserfläche mit der Lagerachse einen mittleren Winkel zwischen 25° und 65°, bevorzugt zwischen 40° und 50° einschließt, wobei sich der mittlere Punkt in der Mitte der Windabweiserfläche zwischen dem windabgewandten Rand und dem windzugewandten Rand befindet und die mittlere Tangente in einer Ebene senkrecht zur Wischarmrichtung angeordnet ist. Der mittlere Winkel wird zwischen dem in Windanströmrichtung vom mittleren Punkt aus zeigenden Teil der mittleren Tangente und der Lagerachse aufgespannt.

Erfindungsgemäß weist die Wischarmadaptereinheit eine Luftleitfläche auf, welche an dem windabgewandten Rand der Windabweiserfläche angeordnet ist und mit der Lagerachse einen Luftleitwinkel zwischen -25° und -65°, bevorzugt zwischen - 40° und -50° einschließt. Das hat den Vorteil, dass Turbulenzen hinter der Windabweiserfläche minimiert werden. Ein negativer Luftleitwinkel bedeutet, dass die Luftleitfläche relativ zur Lagerachse im montierten Zustand der Wischarmadaptereinheit mit einer windabgewandten Luftleitflächenseite in Richtung der Fahrzeugscheibe geneigt ist.

Turbulenzen auf einer der Windanströmrichtung abgewandten Seite der Windabweiserfläche können noch besser minimiert werden, weil die erfindungsgemäße

Luftleitfläche einen Höhenversatz zwischen 1 mm und 6 mm, bevorzugt zwischen 2 mm und 5 mm, besonders bevorzugt zwischen 3 mm und 4 mm zur Windabweiserfläche aufweist, wobei der Höhenversatz entlang einer Flächennormalen einer Wischarmadaptergrundfläche verläuft. Die Wischarmadaptergrundfläche ist im montierten Zustand der Wischarmadaptereinheit bevorzugt parallel oder weitgehend parallel zur Fahrzeugscheibe ausgerichtet.

Eine weitere Möglichkeit, Turbulenzen zu verhindern ist es, wenn die Windabweiserfläche mit ihrem windabgewandten Rand eine Wischarmadaptergrundfläche um wenigstens 1 mm in einer Windanströmrichtung überragt, bevorzugt um wenigstens 2 mm, besonders bevorzugt um wenigstens 5 mm. Auf diese Weise wird ein Spoiler ausgebildet, der einen besonders vorteilhaften Luftstrom ermöglicht.

Besonders vorteilhaft ist eine Wischarmadaptereinheit gekennzeichnet durch eine Wischstange des Wischarms. Bevorzugt ist die Wischarmadaptereinheit mit der Wischstange einstückig ausgebildet. Das ermöglicht eine aerodynamisch besonders günstige Verbindung zwischen der Wischarmadaptereinheit und dem Wischarm. Unter einstückig soll in diesem Zusammenhang insbesondere stoffschlüssig verbunden, wie beispielsweise durch einen Schweißprozess und/oder einen Klebeprozess usw. und besonders vorteilhaft angeformt verstanden werden, wie durch die Herstellung aus einem Guss und/oder durch die Herstellung in einem Ein- oder Mehrkomponentenspritzverfahren.

Eine Adaptereinheit umfassend eine Wischarmadaptereinheit nach einem der vorhergehenden Ansprüche und eine Wischblattadaptereinheit, welche dazu vorgesehen ist, ein Wischblatt aufzunehmen hat den Vorteil, dass diese aufgrund ihrer verbesserten Aerodynamik im Fahrtwind besonders vibrationsarm angeordnet ist und damit eine erhöhte Haltbarkeit aufweist.

### Zeichnungen

In den Zeichnungen sind Ausführungsbeispiele der

Wischarmadaptereinheit gemäß der vorliegenden Erfindung sowie der Adaptereinheit gemäß der vorliegenden Erfindung dargestellt und in der nachfolgenden Beschreibung näher erläutert. Es zeigen
Figur 1 eine Wischvorrichtung mit einer Wischarmadaptereinheit,
Figur 2 einen Schnitt durch die Wischarmadaptereinheit und
Figuren 3 bis 6 Schnitte durch verschieden Varianten der Wischarmadaptereinheit.

### Beschreibung

In den verschiedenen Ausführungsvarianten erhalten gleiche Teile die gleichen Bezugszahlen.

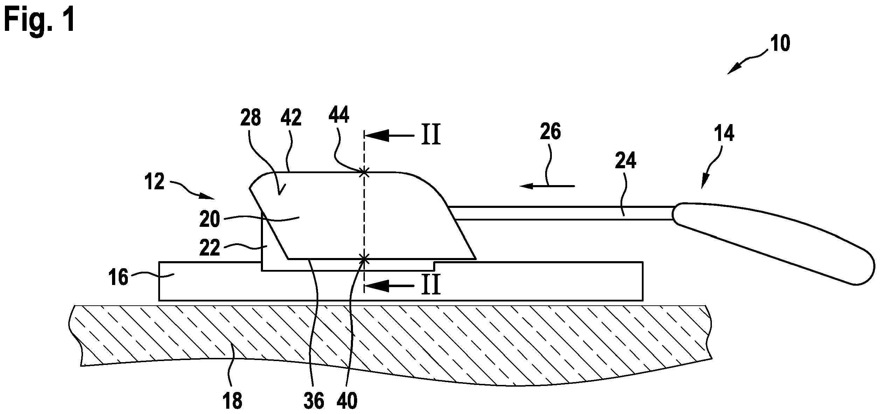

In der Figur 1 ist schematisch eine Wischvorrichtung 10 mit einer Adaptereinheit 12, einem Wischarm 14 und einem Wischblatt 16 in einer Seitenansicht gezeigt. Das Wischblatt 16 ist als Flachwischblatt ausgebildet. Das Wischblatt 16 ist zum Reinigen einer Fahrzeugscheibe 18 vorgesehen. Die Adaptereinheit 12 weist eine Wischarmadaptereinheit 20 auf. Die Adaptereinheit weist eine Wischblattadaptereinheit 22 auf. Der Wischarm 16 weist eine Wischstange 24 auf. Im Ausführungsbeispiel ist eine Hauptlängserstreckungsrichtung der Wischarmadaptereinheit parallel zu einer Wischarmrichtung 26 angeordnet. Eine Hauptlängserstreckungsrichtung des Wischblatts ist parallel zur Wischarmrichtung angeordnet. In vorteilhaften Varianten ist die Hauptlängserstreckungsrichtung der Wischarmadaptereinheit zumindest weitgehend parallel zu einer Wischarmrichtung 26 angeordnet. In vorteilhaften Varianten ist Hauptlängserstreckungsrichtung des Wischblatts ist zumindest weitgehend parallel zur Wischarmrichtung angeordnet.

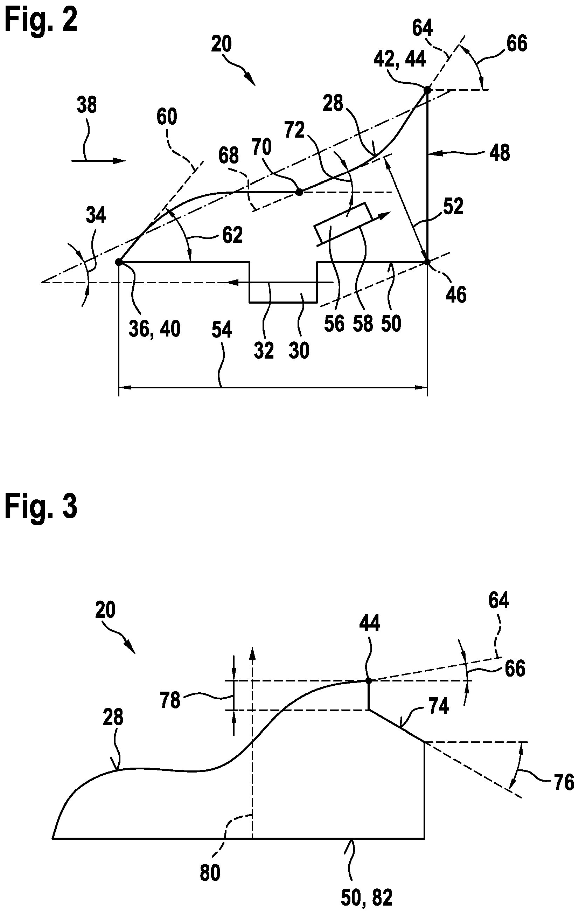

Figur 2 zeigt einen Schnitt durch die Wischarmadaptereinheit 20 entlang der Linie II-II (siehe Figur 1). Die Zeichenebene der Figur 2 ist senkrecht zur Wischarmrichtung 26 angeordnet. Die Wischarmadaptereinheit weist eine Windabweiserfläche 28 auf. Die Wischarmadaptereinheit weist eine Wischblattadaptereinheitaufnahme 30 auf. Die Wischblattadaptereinheitaufnahme 30 ist dazu eingerichtet, die Wischblattadaptereinheit 22 um eine Lagerachse 32 schwenkbar aufzunehmen. Ein Hauptwinkel 34 zwischen der Windabweiserfläche und der Lagerachse beträgt im Ausführungsbeispiel 40°.

Im Ausführungsbeispiel ist die Windabweiserfläche bereichsweise konvex ausgebildet. Beginnend mit einem windzugewandten Rand 36, verläuft die Windabweiserfläche in Richtung einer Windanströmrichtung 38 zunächst konvex. Die Windanströmrichtung 38 ist im Ausführungsbeispiel weitgehend parallel zur Lagerachse 32 ausgerichtet. Der windzugewandte Rand 36 (siehe Figur 1) ist in Figur 2 mit einem vorderen Punkt 40 markiert, welcher auf dem windzugewandten Rand 36 liegt.

Im Ausführungsbeispiel ist die Windabweiserfläche bereichsweise konkav ausgebildet. Beginnend mit einem windabgewandten Rand 42, verläuft die Windabweiserfläche in Gegenrichtung der Windanströmrichtung 38 zunächst konkav. Der windabgewandte Rand 42 (siehe Figur 1) ist in Figur 2 mit einem hinteren Punkt 44 markiert, welcher auf dem windabgewandten Rand 42 liegt.

Eine hintere Achse 46 ist an einer windabgewandten Seite 48 des Wischarmadaptereinheit 20 und an einer Unterseite 50 der Wischarmadaptereinheit 20 angeordnet. Die hintere Achse 46 verläuft im Ausführungsbeispiel weitgehend parallel zur Wischarmrichtung 26. In Figur 2 verläuft die hintere Achse 46 senkrecht zur Bildebene und ist durch einen Punkt markiert. Im Ausführungsbeispiel beträgt ein senkrechter Mindestabstand 52 der Windabweiserfläche zur hinteren Achse 1.2 cm. Ein senkrechter Maximalabstand 54 der Windabweiserfläche zur hinteren Achse beträgt 2.3 cm.

Die Wischarmadaptereinheit weist im Ausführungsbeispiel eine Wischarmaufnahme 56 auf. Die Wischarmaufnahme schließt mit der Windabweiserfläche einen Wischarmwinkel von 0° ein. Eine Öffnungsrichtung 58 der Wischarmaufnahme ist parallel zur Windabweiserfläche angeordnet. Die Wischarmaufnahme ist eine Öffnung für einen Aufnahmekanal, in den der Wischarm einführbar ist. Der Aufnahmekanal verläuft weitgehend parallel zur Wischarmrichtung. Die Wischarmadaptereinheit weist im Ausführungsbeispiel ein nicht abgebildetes Fixiermittel auf, welches zu einer lösbaren Kopplung des Wischarms mit der Wischarmadaptereinheit vorgesehen ist.

Im Ausführungsbeispiel schließt eine vordere Tangente 60 im vorderen Punkt 40 einen vorderen Winkel 62 von 50° mit der Lagerachse ein. Eine hintere Tangente 64 im hinteren Punkt 44 schließt mit der Lagerachse einen hinteren Winkel 66 von 55° ein. In Figur 3 ist eine alternative Ausführungsform abgebildet, in welcher der hintere Winkel 66 10° beträgt.

Im Ausführungsbeispiel schließt eine mittlere Tangente 68 in einem mittleren Punkt 70 einen mittleren Winkel 72 von 45° mit der Lagerachse ein.

Die in Figur 3 abgebildete alternative Ausführungsform weist eine Luftleitfläche 74 auf, welche an dem windabgewandten Rand der Windabweiserfläche angeordnet ist. Die Luftleitfläche schließt mit der Lagerachse einen Luftleitwinkel 76 von -30° ein. Die Luftleitfläche weist einen Höhenversatz 78 von 3 mm zur Windabweiserfläche auf. Der Höhenversatz 78 wird entlang einer Flächennormalen 80 einer Wischarmadaptergrundfläche 82 gemessen. In der in Figur 3 abgebildeten Ausführung entspricht die Wischarmadaptergrundfläche 82 der Unterseite 50.

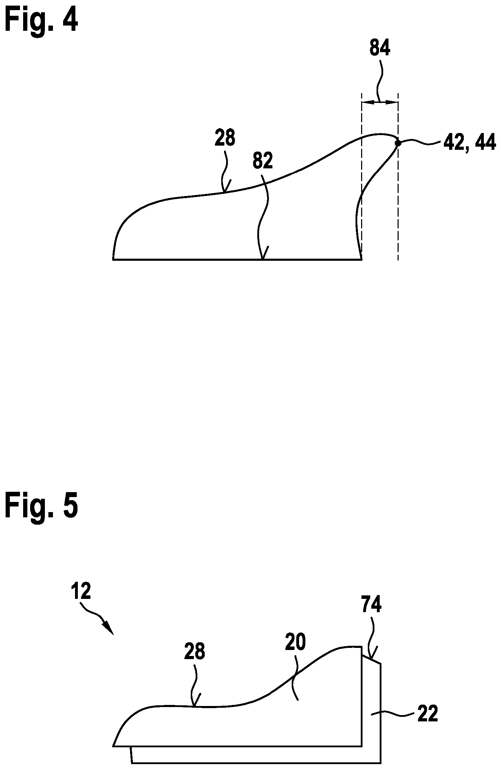

In Figur 4 ist eine weitere Variante des Ausführungsbeispiels gezeigt, in welcher die Windabweiserfläche mit ihrem windabgewandten Rand 42 um einen Überhang 84 von 3 mm in Windanströmrichtung überragt.

In einer in Figur 5 abgebildeten Variante der Adaptereinheit 12 weist die Wischblattadaptereinheit 22 die Luftleitfläche 74 auf. Die Windabweiserfläche ist gegenüber der Luftleitfläche beweglich, insbesondere um die Lagerachse 32 kippbar.

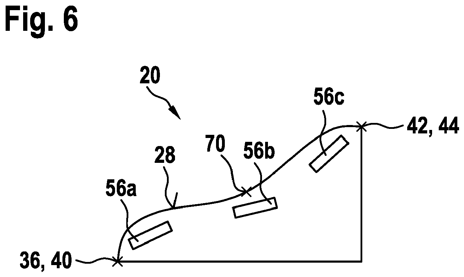

Die Wischarmaufnahme 56 kann an unterschiedlichen Positionen an der Wischarmadaptereinheit 20 relativ zur Windabweiserfläche 28 positioniert sein. In Figur 6 sind mögliche Positionen der Wischarmaufnahme illustriert. Eine erste Wischarmaufnahme 56a ist am vorderen Punkt 40 angeordnet. Eine zweite Wischarmaufnahme 56b ist am mittleren Punk 70 angeordnet. Eine dritte Wischarmaufnahme 56c ist am hinteren Punkt 44 angeordnet.

In vorteilhaften Ausführungsformen weist die Windabweiserfläche 28 eine veränderte bzw. besondere Oberflächenstruktur auf. Die Oberfläche kann wenigstens bereichsweise aufgeraut sein und/oder eine Haifischhautstruktur aufweisen und/oder eine Golfballstruktur aufweisen. Eine solche Oberflächenstruktur beeinflusst den über sie strömenden Luftstrom. Auf diese Weise lassen sich die aerodynamischen Eigenschaften der Windabweiserfläche verbessern. Insbesondere ist es möglich, über die Windabweiserfläche wirkende Anpresskräfte durch eine Auswahl der Art und Anordnung der veränderten Oberflächenstruktur präzise einzustellen.

## Patentansprüche

1. Wischarmadaptereinheit (10), die zu einer Kopplung, insbesondere lösbaren Kopplung mit einem Wischarm (14) vorgesehen ist, aufweisend eine Windabweiserfläche (28), welche dazu eingerichtet ist, eine anströmende Luft abzuweisen und ein Wischblatt (16) an eine Fahrzeugscheibe (18) zu drücken, und aufweisend eine Wischblattadaptereinheitaufnahme (30), welche dazu vorgesehen ist, eine Wischblattadaptereinheit (22) um eine Lagerachse (32) schwenkbar aufzunehmen, wobei die Wischblattadaptereinheit (22) dazu vorgesehen ist, das Wischblatt (16) aufzunehmen, **dadurch gekennzeichnet, dass** die Windabweiserfläche (28) einen Hauptwinkel (34) zwischen 25° und 65°, bevorzugt zwischen 40° und 50° mit der Lagerachse (32) einschließt, wobei die Wischarmadaptereinheit (10) eine Luftleitfläche (74) aufweist, welche an dem windabgewandten Rand (36) der Windabweiserfläche (28) angeordnet ist und mit der Lagerachse (32) einen Luftleitwinkel (76) zwischen -25° und -65°, bevorzugt zwischen -40° und -50°, einschließt und die Luftleitfläche (74) einen Höhenversatz (78) zwischen 1 mm und 6 mm, bevorzugt zwischen 2 mm und 5 mm, besonders bevorzugt zwischen 3 mm und 4 mm zur Windabweiserfläche (28) aufweist, wobei der Höhenversatz (78) entlang einer Flächennormalen (80) einer Wischarmadaptergrundfläche (82) verläuft.

2. Wischarmadaptereinheit (10) nach Anspruch 1, **dadurch gekennzeichnet, dass** die Windabweiserfläche (28) in Richtung der Lagerachse (32) zumindest bereichsweise konkav ausgebildet ist.

3. Wischarmadaptereinheit (10) nach einem der vorhergehenden Ansprüche, **dadurch gekennzeichnet, dass** die Windabweiserfläche (28) in Richtung der Lagerachse (32) zumindest bereichsweise konvex ausgebildet ist.

4. Wischarmadaptereinheit (10) nach einem der vorhergehenden Ansprüche, **dadurch gekennzeichnet, dass** die Wischarmadaptereinheit (10) eine hintere Achse (46) aufweist, welche an einer windabgewandten Seite (42) der Wischarmadaptereinheit (10) und an einer Unterseite (50) bzw. einer der Windabweiserfläche (28) abgewandten Seite der Wischarmadaptereinheit (10) angeordnet ist und weitgehend parallel zu einer Wischarmrichtung angeordnet ist und die Windabweiserfläche (28) einen senkrechten Mindestabstand (52) zur hinteren Achse (46) zwischen 0.8 cm und 2.0 cm, bevorzugt zwischen 1.0 cm und 1.5 cm, aufweist und die Windabweiserfläche (28) einen senkrechten Maximalabstand (54) zur hinteren Achse (46) zwischen 1.5 cm und 3.0 cm, bevorzugt zwischen 2.0 cm und 2.5 cm aufweist.

5. Wischarmadaptereinheit (10) nach einem der vorhergehenden Ansprüche, **dadurch gekennzeichnet, dass** die Wischarmadaptereinheit (10) eine Wischarmaufnahme (56) aufweist, welche mit der Windabweiserfläche (28) einen Wischarmwinkel (0°) zwischen -15° und 15°, bevorzugt zwischen -5° und 5°, einschließt.

6. Wischarmadaptereinheit (10) nach einem der vorhergehenden Ansprüche, **dadurch gekennzeichnet, dass** eine vordere Tangente (60) in einem vorderen Punkt (40) der Windabweiserfläche (28) mit der Lagerachse (32) einen vorderen Winkel (62) zwischen 30° und 70°, bevorzugt zwischen 45° und 55° einschließt, wobei sich der vordere Punkt (40) an einem windzugewandten Rand (36) der Windabweiserfläche (28) befindet und die vordere Tangente (60) in einer Ebene senkrecht zur Wischarmrichtung angeordnet ist.

7. Wischarmadaptereinheit (10) nach einem der vorhergehenden Ansprüche, **dadurch gekennzeichnet, dass** eine hintere Tangente (64) in einem hinteren Punkt (44) an der Windabweiserfläche (28) mit der Lagerachse (32) einen hinteren Winkel (66) zwischen 10° und 60°, bevorzugt zwischen 25° und 35° einschließt, wobei sich der hintere Punkt (44) an einem windabgewandten Rand (42) der Windabweiserfläche (28) befindet und die hintere Tangente (64) in einer Ebene senkrecht zur Wischarmrichtung angeordnet ist.

8. Wischarmadaptereinheit (10) nach einem der vorhergehenden Ansprüche, **dadurch gekennzeichnet, dass** eine mittlere Tangente (68) in einem mittleren Punkt (nicht nummeriert) an der Windabweiserfläche (28) mit der Lagerachse (32) einen mittleren Winkel (72) zwischen 25° und 65°, bevorzugt zwischen 40° und 50° einschließt, wobei sich der mittlere Punkt in der Mitte der Windabweiserfläche (28) zwischen dem windabgewandten Rand (36) und dem windzugewandten Rand (36) befindet und die mittlere Tangente (68) in einer Ebene senkrecht zur Wischarmrichtung angeordnet ist.

9. Wischarmadaptereinheit (10) nach einem der vorhergehenden Ansprüche, **dadurch gekennzeichnet, dass** die Windabweiserfläche (28) mit ihrem windabgewandten Rand eine Wischarmadaptergrundfläche (82) um wenigstens 1 mm in einer Windanströmrichtung (38) überragt, bevorzugt um wenigstens 2 mm, besonders bevorzugt um wenigstens 5 mm.

10. Wischarmadaptereinheit (10) nach einem der vorhergehenden Ansprüche, **gekennzeichnet durch** eine Wischstange (24) des Wischarms (14).

11. Adaptereinheit (12) umfassend eine Wischarmadaptereinheit (10) nach einem der vorhergehenden Ansprüche und eine Wischblattadaptereinheit (22), welche dazu vorgesehen ist, ein Wischblatt (16) aufzunehmen.

## Claims

1. Wiper arm adapter unit (10) which is provided for coupling, in particular releasably coupling, to a wiper arm (14), having a wind deflector surface (28), which is designed to deflect inflowing air and to press a wiper blade (16) against a vehicle window (18), and having a wiper blade adapter unit receptacle (30), which is provided for receiving a wiper blade adapter unit (22) pivotably about a bearing axis (32), wherein the wiper blade adapter unit (22) is provided to receive the wiper blade (16), **characterized in that** the wind deflector surface (28) encloses a main angle (34) of between 25° and 65°, preferably between 40° and 50°, with the bearing axis (32), wherein the wiper arm adapter unit (10) has an air-guiding surface (74), which is arranged on the wind-averted edge (36) of the wind deflector surface (28) and encloses an air-guiding angle (76) of between -25° and -65°, preferably between -40° and -50°, with the bearing axis (32), and the air-guiding surface (74) has a height offset (78) of between 1 mm and 6 mm, preferably between 2 mm and 5 mm, particularly preferably between 3 mm and 4 mm, with respect to the wind deflector surface (28), wherein the height offset (78) runs along a surface normal (80) of a wiper arm adapter base area (82).

2. Wiper arm adapter unit (10) according to Claim 1, **characterized in that** the wind deflector surface (28) is at least partially concave in the direction of the bearing axis (32).

3. Wiper arm adapter unit (10) according to either of the preceding claims, **characterized in that** the wind deflector surface (28) is at least partially convex in the direction of the bearing axis (32).

4. Wiper arm adapter unit (10) according to one of the preceding claims, **characterized in that** the wiper arm adapter unit (10) has a rear axis (46) which is arranged on a wind-averted side (42) of the wiper arm adapter unit (10) and on a lower side (50) or a side of the wiper arm adapter unit (10) facing away from the wind deflector surface (28) and is arranged substantially parallel to a wiper arm direction, and the wind deflector surface (28) is at a perpendicular minimum distance (52) from the rear axis (46) of between 0.8 cm and 2.0 cm, preferably between 1.0 cm and 1.5 cm, and the wind deflector surface (28) is at a perpendicular maximum distance (54) from the rear axis (46) of between 1.5 cm and 3.0 cm, preferably between 2.0 cm and 2.5 cm.

5. Wiper arm adapter unit (10) according to one of the preceding claims, **characterized in that** the wiper arm adapter unit (10) has a wiper arm receptacle (56) which encloses a wiper arm angle (0°) of between -15° and 15°, preferably between -5° and 5°, with the wind deflector surface (28).

6. Wiper arm adapter unit (10) according to one of the preceding claims, **characterized in that** a front tangent (60) at a front point (40) of the wind deflector surface (28) encloses a front angle (62) of between 30° and 70°, preferably between 45° and 55°, with the bearing axis (32), wherein the front point (40) is located at a wind-facing edge (36) of the wind deflector surface (28) and the front tangent (60) is arranged in a plane perpendicular to the wiper arm direction.

7. Wiper arm adapter unit (10) according to one of the preceding claims, **characterized in that** a rear tangent (64) at a rear point (44) on the wind deflector surface (28) encloses a rear angle (66) of between 10° and 60°, preferably between 25° and 35°, with the bearing axis (32), wherein the rear point (44) is located at a wind-averted edge (42) of the wind deflector surface (28) and the rear tangent (64) is arranged in a plane perpendicular to the wiper arm direction.

8. Wiper arm adapter unit (10) according to one of the preceding claims, **characterized in that** a central tangent (68) at a central point (not numbered) on the wind deflector surface (28) encloses a central angle (72) of between 25° and 65°, preferably between 40° and 50°, with the bearing axis (32), wherein the central point is located in the centre of the wind deflector surface (28) between the wind-averted edge (36) and the wind-facing edge (36) and the central tangent (68) is arranged in a plane perpendicular to the wiper arm direction.

9. Wiper arm adapter unit (10) according to one of the preceding claims, **characterized in that** the wind deflector surface (28) protrudes with its wind-averted edge over a wiper arm adapter base area (82) by at least 1 mm in a wind inflow direction (38), preferably by at least 2 mm, particularly preferably by at least 5 mm.

10. Wiper arm adapter unit (10) according to one of the preceding claims, **characterized by** a wiper rod (24) of the wiper arm (14).

11. Adapter unit (12) comprising a wiper arm adapter unit (10) according to one of the preceding claims and a wiper blade adapter unit (22), which is provided to receive a wiper blade (16).

## Revendications

1. Unité d'adaptateur de bras d'essuie-glace (10), qui est prévue pour un couplage, notamment un couplage détachable avec un bras d'essuie-glace (14), présentant une surface de déflecteur de vent (28), qui est adaptée pour repousser un air affluant et pour presser un balai d'essuie-glace (16) contre un pare-brise de véhicule (18), et présentant un logement d'unité d'adaptateur de balai d'essuie-glace (30), qui est prévu pour recevoir une unité d'adaptateur de balai d'essuie-glace (22) de manière pivotante autour d'un axe de palier (32), l'unité d'adaptateur de balai d'essuie-glace (22) étant prévue pour recevoir le balai d'essuie-glace (16), **caractérisée en ce que** la surface de déflecteur de vent (28) forme avec l'axe de palier (32) un angle principal (34) compris entre 25° et 65°, de préférence entre 40° et 50°, l'unité d'adaptateur de bras d'essuie-glace (10) présentant une surface de guidage d'air (74) qui est agencée sur le bord (36) de la surface de déflecteur de vent (28) détourné du vent, et forme avec l'axe de palier (32) un angle de guidage d'air (76) compris entre -25° et -65°, de préférence entre -40° et -50°, et la surface de guidage d'air (74) présente un décalage en hauteur (78) compris entre 1 mm et 6 mm, de préférence entre 2 mm et 5 mm, de manière particulièrement préférée entre 3 mm et 4 mm par rapport à la surface de déflecteur de vent (28), le décalage en hauteur (78) s'étendant le long d'une normale à la surface (80) d'une surface de base d'adaptateur de bras d'essuie-glace (82).

2. Unité d'adaptateur de bras d'essuie-glace (10) selon la revendication 1, **caractérisée en ce que** la surface de déflecteur de vent (28) est réalisée sous forme concave au moins par zones dans la direction de l'axe de palier (32) .

3. Unité d'adaptateur de bras d'essuie-glace (10) selon l'une quelconque des revendications précédentes, **caractérisée en ce que** la surface de déflecteur de vent (28) est réalisée sous forme convexe au moins par zones dans la direction de l'axe de palier (32).

4. Unité d'adaptateur de bras d'essuie-glace (10) selon l'une quelconque des revendications précédentes, **caractérisée en ce que** l'unité d'adaptateur de bras d'essuie-glace (10) présente un axe arrière (46) qui est agencé sur un côté (42) de l'unité d'adaptateur de bras d'essuie-glace (10) détourné du vent et sur un côté inférieur (50) ou sur un côté de l'unité d'adaptateur de bras d'essuie-glace (10) détourné de la surface de déflecteur de vent (28) et est agencé en grande partie parallèlement à une direction de bras d'essuie-glace, et la surface de déflecteur de vent (28) présente une distance minimale verticale (52) par rapport à l'axe arrière (46) comprise entre 0,8 cm et 2,0 cm, de préférence entre 1,0 cm et 1,5 cm, et la surface de déflecteur de vent (28) présente une distance verticale maximale (54) par rapport à l'axe arrière (46) comprise entre 1,5 cm et 3,0 cm, de préférence entre 2,0 cm et 2,5 cm.

5. Unité d'adaptateur de bras d'essuie-glace (10) selon l'une quelconque des revendications précédentes, **caractérisée en ce que** l'unité d'adaptateur de bras d'essuie-glace (10) présente un logement de bras d'essuie-glace (56) qui forme avec la surface de déflecteur de vent (28) un angle de bras d'essuie-glace (0°) compris entre -15° et 15°, de préférence entre -5° et 5°.

6. Unité d'adaptateur de bras d'essuie-glace (10) selon l'une quelconque des revendications précédentes, **caractérisée en ce qu'**une tangente avant (60) en un point avant (40) de la surface de déflecteur de vent (28) forme avec l'axe de palier (32) un angle avant (62) compris entre 30° et 70°, de préférence entre 45° et 55°, le point avant (40) se trouvant sur un bord (36) de la surface de déflecteur de vent (28) tourné vers le vent et la tangente avant (60) étant agencée dans un plan perpendiculaire à la direction du bras d'essuie-glace.

7. Unité d'adaptateur de bras d'essuie-glace (10) selon l'une quelconque des revendications précédentes, **caractérisée en ce qu'**une tangente arrière (64) en un point arrière (44) sur la surface de déflecteur de vent (28) forme avec l'axe de palier (32) un angle arrière (66) compris entre 10° et 60°, de préférence entre 25° et 35°, le point arrière (44) se trouvant sur un bord (42) de la surface de déflecteur de vent (28) détourné du vent et la tangente arrière (64) étant agencée dans un plan perpendiculaire à la direction du bras d'essuie-glace.

8. Unité d'adaptateur de bras d'essuie-glace (10) selon l'une quelconque des revendications précédentes, **caractérisée en ce qu'**une tangente centrale (68) en un point central (non numéroté) sur la surface de déflecteur de vent (28) forme avec l'axe de palier (32) un angle central (72) compris entre 25° et 65°, de préférence entre 40° et 50°, le point central se trouvant au milieu de la surface de déflecteur de vent (28) entre le bord (36) détourné du vent et le bord (36) tourné vers le vent, et la tangente centrale (68) étant agencée dans un plan perpendiculaire à la direction du bras d'essuie-glace.

9. Unité d'adaptateur de bras d'essuie-glace (10) selon l'une quelconque des revendications précédentes, **caractérisée en ce que** la surface de déflecteur de vent (28) dépasse, avec son bord détourné du vent, une surface de base d'adaptateur de bras d'essuie-glace (82) d'au moins 1 mm dans une direction d'écoulement du vent (38), de préférence d'au moins 2 mm, de manière particulièrement préférée d'au moins 5 mm.

10. Unité d'adaptateur de bras d'essuie-glace (10) selon l'une quelconque des revendications précédentes, **caractérisée par** une tige d'essuie-glace (24) du bras d'essuie-glace (14).

11. Unité d'adaptateur (12) comprenant une unité d'adaptateur de bras d'essuie-glace (10) selon l'une quelconque des revendications précédentes et une unité d'adaptateur de balai d'essuie-glace (22) qui est prévue pour recevoir un balai d'essuie-glace (16).
